**Europäisches Patentamt**

**European Patent Office**

**Office européen des brevets**

(19)

(11) Numéro de publication: **0 006 575**
**B2**

(12) **NOUVEAU FASCICULE DE BREVET EUROPEEN**

(45) Date de publication du nouveau fascicule du brevet:
**23.04.86**

(21) Numéro de dépôt: **79102042.3**

(22) Date de dépôt: **20.06.79**

(51) Int. Cl.⁴: **A 21 B 5/02,** A 23 L 1/18,
A 23 P 1/00

(54) Dispositif pour la préparation de produits alimentaires à base de céréales cuites et expansées.

(30) Priorité: **22.06.78 BE 188771**

(43) Date de publication de la demande:
**09.01.80 Bulletin 80/1**

(45) Mention de la délivrance du brevet:
**30.12.81 Bulletin 81/52**

(45) Mention de la décision concernant l'opposition:
**23.04.86 Bulletin 86/17**

(84) Etats contractants désignés:
**AT CH DE FR GB IT LU NL SE**

(56) Documents cités:
**BE - A - 799 316**
**FR - A - 578 984**
**FR - A - 2 059 818**
**FR - A - 2 194 564**
**FR - A - 2 303 488**
**FR - A - 2 305 448**
**GB - A - 945 694**
**US - A - 557 299**
**US - A - 2 334 082**
**US - A - 3 511 899**

(73) Titulaire: **Gevaert, Omer, Van Nieuwenhovestraat 9,
Geraardsbergen (BE)**

(72) Inventeur: **Gevaert, Stephan, Oude Vierschaarstraat, 54,
Sint-Martens-Latem (BE)**

(74) Mandataire: **Pirson, Jean et al, c/o Bureau Gevers 7, rue
de Livourne, Boîte no 1, B-1050 Bruxelles (BE)**

EP 0 006 575 B2

ACTORUM AG

## Description

La présente invention est relative à un dispositif de préparation de produits alimentaires à base de céréales cuites sous pression et ensuite expansées, comprenant un moule constitué d'une matrice creuse, fixe, chauffée, un poinçon coopérant avec ce moule, et un moyen pour faire coulisser le poinçon, ce dernier occupant au cours de ce coulissement une première position dans laquelle le poinçon est à l'intérieur du moule, qu'il ferme, et exerce sur le moule par ledit moyen une pression pendant la cuisson des céréales, une deuxième position dans laquelle le poinçon est à l'extérieur du moule, qui est alors ouvert, et inversement à nouveau la première position, une troisième position, dans laquelle la cavité du moule n'est pas encore ouverte, étant temporairement occupée par le poinçon grâce à un moyen de butée intervenant au cours du coulissement de la première à la deuxième position, ainsi qu'un dispositif d'introduction des céréales à cuire par l'orifice du moule dans lequel pénètre le poinçon et un dispositif d'évacuation du produit à base de céréales expansées obtenu par ce même orifice. Un tel dispositif est révélé par le brevet BE-A-799 316.

Les dispositifs de préparation automatiques de produits alimentaires à base de céréales cuites et expansées, qui ont été expérimentés jusqu'à présent, présentent l'inconvénient de l'utilisation d'une came et d'un organe de guidage des organes permettant la cuisson sous pression et l'expansion des céréales. Cette came et cet organe de guidage subissent en effet rapidement les effets de l'usure à un point tel que les produits préparés au moyen de ces dispositifs ne répondent plus aux qualités requises, et cela du fait que l'expansion souhaitée ne peut plus être obtenue de manière précise. D'autre part, ces dispositifs sont assez complexes en ce qui concerne leur construction et par conséquent coûteux. Un dispositif analogue à ceux précités, prévu pour des produits non alimentaires, est par exemple décrit dans le brevet des Etats-Unis d'Amérique n° 2 334 082.

On connaît également, par le brevet français n° 2 303 488 et le brevet aux Etats-Unis d'Amérique B 557 299, un moule tubulaire dans lequel de la matière alimentaire est introduite à une extrémité lorsque le couvercle de fermeture de ce moule est ouvert. Un piston est déplacé à l'intérieur du moule par l'autre extrémité du moule et sert à fermer ce dernier pendant la cuisson. Un mécanisme à encliquetage ou à frottement est prévu au niveau du piston de façon que, si des valeurs de dilatation ou de retrait de la matière cuite son dépassées, un coulissement automatique du piston intervient pour accompagner cette dilatation ou ce retrait de la matière alimentaire pendant son traitement. Ce dispositif présente l'inconvénient que l'évacuation, comme l'alimentation, du moule se fait par l'extrémité du moule opposée à celle dans laquelle pénètre le piston et cela nécessite l'ouverture d'un couvercle de fermeture situé à cette extrémité du moule. Par ailleurs, le mécanisme à encliquetage ou à frottement ne visent qu'à compenser des dilatations ou des retraits éventuels de la matière au cours de la cuisson et non pas à donner à cette matière un volume prédéterminé. De plus ce mécanisme présente de par sa nature l'inconvénient d'une usure par frottement.

Un des buts essentiels de l'invention consiste à remédier à ces inconvénients et à présenter un dispositif, de construction aisée et rapide, qui permette d'obtenir un haut degré de précision au niveau de l'expansion des céréales, tout en assurant une pression de cuisson très élevée.

A cet effet, il est prévu, suivant l'invention, un dispositif tel que décrit au préambule de la revendication 1 dans lequel le moyen pour faire coulisser le poinçon comprend un vérin relié directement ou par un organe d'entraînement au poinçon de manière à pouvoir le faire coulisser suivant un mouvement de va-et-vient entre les première et deuxième positions susdites et en ce que le moyen de butée est mobile relativement au poinçon ou à son organe d'entraînement entre une position inactive et une position active dans laquelle il est capable, entre la première et la deuxième position du poinçon, d'arrêter le poinçon dans la troisième position dans laquelle le vérin n'exerce plus de pression sur le moule et dans laquelle l'expansion des céréales est achevée.

Avantageusement, le vérin comprend une tige d'actionnement reliée à pivotement à l'organe d'entraînement du poinçon, lequel organe est également relié à pivotement à l'extrémité du poinçon opposée à celle pénétrant dans le moule et est supporté sur un axe stationnaire de manière à pouvoir pivoter autour de ce dernier.

Suivant une forme avantageuse de l'invention, le moyen de butée est une butée mobile déplaçable, par l'intermédiaire d'un organe de commande, entre deux positions extrêmes, dont l'une est située dans la trajectoire d'au moins une partie du poinçon ou de l'organe d'entraînement de ce dernier de manière à l'arrêter dans la troisième position susdite, ce qui permet l'expansion des céréales cuites, la butée mobile étant amenée dans cette position extrême approximativement au moment où le poinçon atteint sa première position où il exerce une pression sur le moule, la butée mobile étant située hors de cette trajectoire dans l'autre de ses positions extrêmes et étant amenée à cette autre position à la fin de l'expansion des céréales.

Suivant une forme perfectionnée de l'invention, le dispositif comprend un doseur qui coopère avec le mécanisme d'entraînement du poinçon pour introduire les produits à cuire et évacuer les produits expansés.

D'autres détails et particularités de l'invention ressortiront de la description donnée ci-après de plusieurs formes de réalisation du dispositif suivant l'invention, données à titre non limitatif, et avec référence aux dessins annexés.

La figure 1 représente une vue en élévation, partiellement en coupe, d'une première forme de réalisation de l'invention.

La figure 2 représente une vue en élévation partielle d'une deuxième forme de réalisation de l'invention.

La figure 3 représente une vue en coupe, suivant la ligne III–III, de la figure 1.

La figure 4 représente une vue en élévation partielle d'une troisième forme de réalisation de l'invention.

Dans ces figures, les éléments identiques ou analogues sont désignés par les mêmes références.

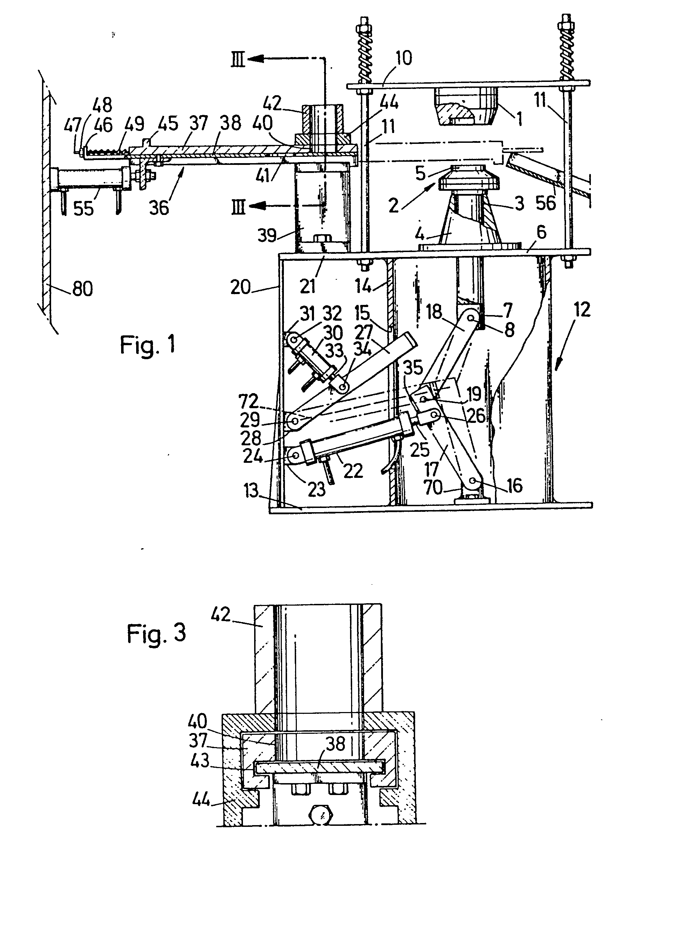

Le dispositif de préparation de produits alimentaires à base de céréales cuites et expansées illustré sur la figure 1 comprend un moule constitué d'une matrice creuse 1, ayant l'allure d'un récipient renversé, coopérant avec un poinçon 2 qui, par coulissement dans la matrice, est capable de fermer et d'ouvrir la cavité du moule.

Dans l'exemple illustré, le poinçon 2 est guidé verticalement de manière à permettre un mouvement de va-et-vient de la tête 5 du poinçon dans et hors de la matrice 1 située au-dessus du poinçon 2. La tige 3 du poinçon 2 coulisse au travers d'un anneau de guidage 4 supporté sur un plateau 6 du bâti du dispositif. L'extrémité de la tige 3 du poinçon opposée à la tête 5 a, en section longitudinale, une forme de U et présente par conséquent deux oreilles planes parallèles 7, orientées verticalement vers le bas et que traverse perpendiculairement à leurs plans un axe 8.

La matrice est suspendue de manière fixe à un plateau supérieur 10 qui est supporté par le plateau 6 au moyen de montants 11. Le plateau 6 est lui-même supporté par le bâti qui, dans la forme de réalisation illustrée, est un boîtier 12 en forme de parallélèpipède droit dont le fond est formé du socle 13 et le couvercle du plateau 6 lui-même. L'une des faces latérales de ce boîtier 12 (celle désignée sur la figure 1 par la référence 14) présente une large ouverture 15.

Sur le socle 13 est agencé le support 70 d'un axe 16 parallèle à l'axe 8, axe 16 auquel un bras de transmission 17, en forme de barre, est relié par l'une de ses extrémités de manière à pouvoir pivoter autour de lui. De même un bras de transmission 18, en forme de barre, est relié à l'une de ses extrémités à l'axe 8 de manière à pouvoir pivoter autour de ce dernier. Les deux bras de transmission 17 et 18 sont reliés entre eux à pivotement par leur autre extrémité à l'aide d'un axe commun 19, parallèle aux axes 8 et 16, autour duquel ces bras s'articulent.

Dans la forme de réalisation illustrée sur la figure 1, un montant 20, fixé sur le socle 13, est prévu à une certaine distance du boîtier 12 en face de la face 14 du boîtier. Ce montant est ancré au boîtier 12 par l'intermédiaire d'un prolongement latéral 21 du plateau 6.

Un vérin 22 est relié au montant 20 par l'intermédiaire du support 23 d'un axe 24 autour duquel le vérin peut pivoter. Ce vérin est par exemple un vérin hydraulique à double effet, dont la tige d'actionnement 25 passe au travers de l'ouverture 15 du boîtier 12. L'extrémité de cette tige 25 est reliée à l'un des bras de transmission, dans le cas illustré, le bras 17, par l'intermédiaire d'un axe 26 d'articulation.

Sous l'action de la tige d'actionnement 25, les bras articulés 17 et 18 peuvent passer d'une position extrême dans laquelle, la tige 25 étant revenue dans sa position de début de course dans le vérin 22, les bras sont largement inclinés l'un par rapport à l'autre, ainsi qu'il est illustré en traits pleins sur la figure 1, à une autre position extrême dans laquelle la tige 25 faisant saillie au maximum, les bras 17 et 18 sont, vus latéralement, en alignement vertical l'un par rapport à l'autre (position non représentée sur la figure 1).

Dans la forme de réalisation illustrée sur la figure 1, une barre de butée 27 est reliée au montant 20 par l'intermédiaire du support 28 d'un axe 29 autour duquel la butée peut pivoter. Cet axe 29 est parallèle aux axes 8, 16 et 19 et la barre de butée est agencée de manière à pouvoir pivoter dans le même plan que celui de l'un des bras de transmission 17 et 18, dans le cas illustré du bras 17.

Un vérin 30 est également relié au montant 20 par l'intermédiaire du support 31 d'un axe 32 autour duquel le vérin peut pivoter. Ce vérin peut également être par exemple un vérin hydraulique à double effet, dont la tige d'actionnement 33 est reliée à son extrémité, par l'intermédiaire d'un axe 34 d'articulation, à la butée 27.

Lorsque la tige 33 est en fin de course, la butée 27 est amenée par pivotement autour de l'axe 29 dans une position où son extrémité se trouve dans la trajectoire circulaire de l'extrémité supérieure du bras 17. A cet endroit le bras 17 présente une surépaisseur 35 servant de surface d'appui pour la butée 27. La barre de butée est alors orientée de telle façon que la force imprimée par le bras de transmission 17 sur la barre dans la position de butée a pour direction l'axe longitudinal 72 de la barre de butée 27. La position de butée est représentée en traits mixtes sur la figure 1. Lorsque la tige 33 est en début de course, la butée 27 est dans une position telle que le mouvement des bras 17 et 18 est totalement libéré.

Le dispositif suivant l'invention comprend aussi un dispositif doseur 36. Ce doseur comprend un jeu de deux plaques horizontales superposées 37 et 38, capables de coulisser entre deux positions extrêmes, dans leur plan, sur un support 39 situé à côté du poinçon 2. La plaque supérieure 37 et la plaque inférieure 38 présentent chacune une découpe 40 et respectivement 41. La dimension en volume de la découpe 40 correspond à la quantité de céréales à introduire dans le moule. Cette découpe 40 se situe, dans la position extrême de la plaque 37 la plus éloignée du moule, en dessous d'une installation d'alimentation en céréales constituée, dans l'exemple illustré, d'un cylindre d'introduction 42 fixé sur le support 39. La découpe 41 se situe, dans la position extrême de la plaque 38 la plus éloignée du moule, à une grande distance du moule que la découpe 40, de sorte que cette dernière est obturée par le bas par la plaque inférieure 38 en formant ainsi un réservoir apte à recevoir les céréales introduites par le cylindre 42.

La découpe 40 se situe, dans l'autre position extrême de la plaque 37, entre la matrice 1 et le poinçon 2, exactement en dessous du creux de la matrice. La découpe 41 se situe, dans l'autre position extrême de la plaque 38, exactement en dessous de la découpe 40 de manière à permettre aux produits contenus dans celle-ci de se déposer par gravité sur la tête 5 du poinçon.

La plaque inférieure 38 est agencée de manière à pouvoir coulisser dans une rainure de guidage 43 pratiquée le long de la face inférieure de la plaque supérieure 37.

Un moyen d'actionnement, dans le cas illustré un vérin 55, est relié de manière fixe, d'une part au mur 80, et d'autre part, à la plaque 38 et il entraîne celle-ci en direction du moule. Ce vérin est par exemple un vérin hydraulique à double effet, fixé sur le montant 20. La plaque 38 entraîne simultanément, étant donné la liaison de frottement qui existe entre elles, la plaque 37. Ces deux plaques sont guidées au travers d'une glissière 44 fixée sur le support 39. La plaque 37 présente sur sa face supérieure une saillie 45 qui, dans la position de la plaque 37 la plus éloignée du moule, se trouve à une distance de la glissière 44 égale à la distance nécessaire pour déplacer la découpe 40 exactement en dessous du creux de la matrice 1.

Dans la forme de réalisation illustrée sur la figure 1, la plaque inférieure 38 fait saillie par rapport à la plaque 37 dans la direction opposée au moule, lorsque les plaques sont dans leur position extrême la plus éloignée du moule. La plaque 38 présente à cette extrémité en saillie un rebord 46 qui est situé à une distance de l'extrémité de la plaque 37 la plus éloignée du moule égale à la distance que doit parcourir la découpe 41 pour être située exactement en dessous du moule 1. Ce rebord 46 coulisse sur une tige 47 faisant saillie par rapport à la plaque 37 suivant l'axe de déplacement des plaques. A l'extrémité filetée de cette tige 47 est vissé un écrou de réglage 48, tandis qu'un ressort de rappel 49 est agencé entre le rebord 46 et la plaque 37.

Le fonctionnement de ce dispositif est le suivant:

Lorsque la découpe 40 est en dessous de l'installation d'alimentation 42, elle est automatiquement remplie de céréales à cuire. A ce moment, la tête du poinçon 2 est en position haute, c'est-à-dire introduite au maximum dans la cavité de la matrice 1 et, sous l'action de la tige d'actionnement, les deux bras de transmission 17 et 18 sont, vus latéralement, alignés verticalement, le poinçon 2 exerçant dans cette position une pression maximum contre le moule. A ce moment également, la barre de butée 27 est déjà en position basse, c'est-à-dire qu'elle est située dans la trajectoire que devra suivre le bras 17 pour faire descendre le poinçon 2. Après le temps nécessaire à la cuisson sous pression des céréales situées entre le poinçon et la matrice, la tige d'actionnement 25 est ramenée vers sa position initiale, mais la butée 27, en butant contre la surface d'appui 35 du bras de transmission 17, ne permet qu'un coulissement limité vers le bas du poinçon 2, et cela de manière qu'il y ait expansion des céréales cuites dans le moule, c'est-à-dire que la cavité du moule reste fermée. La précision de l'ajustement de la butée 27, en position de butée, est par conséquent essentielle car c'est de cela que dépendra principalement la qualité du produit expansé. Après la durée d'expansion du produit, la butée 27 est relevée sous l'action de la tige 33 du vérin 30 et la tige 25 poursuit sa traction sur le bras 17, ce qui entraîne la séparation entre le poinçon 2 et la matrice 1, la galette de produit expansé reposant sur la tête 5 du poinçon.

Pendant le retour de la tige 25 à sa position de début de course, la tige du vérin 55 pousse en direction du moule la plaque 38 qui entraîne à son tour, par liaison de frottement, la plaque 37. Ces plaques passent au-dessus de la tête du poinçon en poussant horizontalement devant elles le produit expansé qui tombe de l'autre côté du poinçon 2 dans une gouttière 56 destinée à la récolte du produit fini. Lorsque la découpe 40 est exactement en dessous du creux de la matrice 1, la sailie 45 bute contre la glissière 44, ce qui empêche la plaque 37 de continuer à avancer sous l'action du vérin 55. La plaque 38, elle, continue à avancer, à l'encontre de la force du ressort de rappel 49, jusqu'à ce que le rebord 46 bute contre l'extrémité de la plaque 37. Dans cette position, la découpe 41 est exactement en dessous de la découpe 40, ce qui libère les céréales contenues dans la découpe 40, ces céréales tombant sur la face supérieure de la tête du poinçon 2. A ce moment, le vérin 55 rappelle sa tige d'actionnement vers sa position initiale et entraîne dans cette direction la plaque 38 qui, grâce à l'action de rappel du ressort 49, coulisse tout d'abord par rapport à la plaque 37, jusqu'à ce que le rebord 46 bute contre l'écrou de réglage 48. La découpe 41 n'est alors plus située en dessous de la découpe 40 et celle-ci est à nouveau obturée par la plaque 38. Les deux plaques sont alors entraînées ensemble vers leur position initiale où la découpe 40 se trouve en dessous du cylindre 42 et est à nouveau remplie.

Dès le moment où les plaques superposées ne se trouvent plus dans la trajectoire du poinçon, celui-ci est automatiquement entraîné vers le haut dans le creux de la matrice et le cycle recommence.

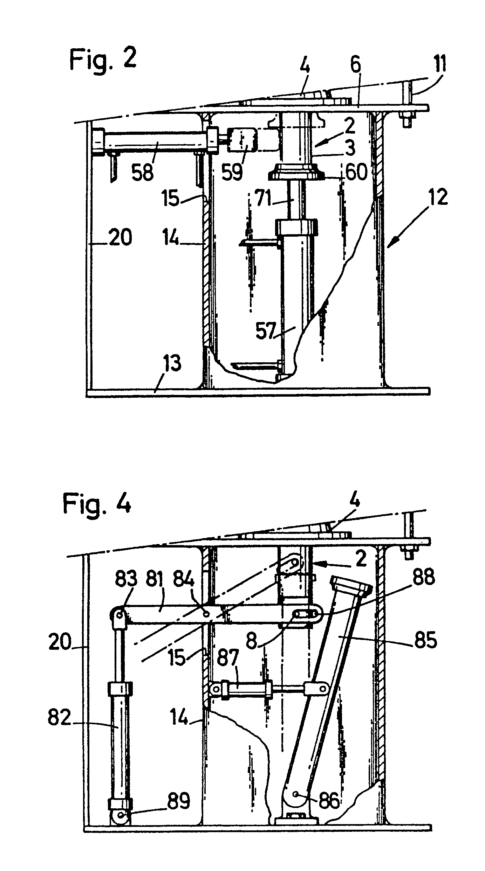

Suivant la forme de réalisation illustrée sur la figure 2, on a prévu que la tige d'actionnement 71 du vérin 57 destiné au mouvement du poinçon et la tige 3 du poinçon soient coaxiaux et même on peut prévoir qu'ils soient façonnés d'une seule pièce, sans organes d'entraînement ou de transmission prévus entre eux. Le vérin 57 est alors fixé au socle 13 à la verticale en dessous du poinçon 2 et la tige d'actionnement se déplace suivant l'axe vertical de déplacement du poinçon. On peut prévoir un vérin latéral 58 dont la tige déplace, perpendiculairement par rapport à la tige 5 du poinçon, une butée 59, au travers de l'ouverture 15 du boîtier 12. En position de fin de course (en traits mixtes), cette butée 59 se trouve dans la trajectoire de descente d'un anneau en saillie 60 prévu sur la tige du poinçon et servant de surface d'appui pour la butée 59. Comme le reste du dispositif est prévu de la même manière que sur la figure 1, on n'a pas estimé nécessaire de le représenter plus en détail.

Suivant la forme de réalisation illustrée sur la figure 4, on a prévu que l'organe d'entraînement du poinçon comprend uniquement un seul bras de transmission 81. A l'une de ses extrémités, ce bras est relié à une extrémité de la tige d'un vérin 82, par l'intermédiaire d'un axe 83, de manière à pouvoir pivoter autour de cet axe. A l'autre de ses extrémités, le bras 81 est relié à l'extrémité du poinçon 2 opposée à la tête 5, par l'intermédiaire de l'axe 8, de manière à pouvoir pivoter autour de cet axe. L'axe 8 est passé au travers d'une ouverture 88 pratiquée à cette extrémité du bras 81, cette ouverture étant allongée dans le sens longitudinal du bras 81, de manière à permettre en même temps que le pivotement du bras autour de l'axe 8, un coulissement du bras par rapport à ce dernier. Le bras 81 est enfin supporté dans sa partie centrale par un axe fixe 84 de manière à pouvoir pivoter autour de ce dernier, les trois axes 8, 84 et 83 étant agencés mutuellement parallèlement. Le vérin 82 est fixé sur le socle 13 du bâti sur un axe fixe 89, de manière à pouvoir pivoter autour de ce dernier, et il est situé à l'extérieur du boîtier 12, en face de la face 14 de ce dernier. Le bras 81 passe au travers de l'ouverture 15 du boîtier et sert par conséquent de bras de levier entre le poinçon et le vérin 82, bras de levier qui pivote autour de l'axe 84. Le bras 81 est enfin supporté dans sa partie centrale par un axe fixe 84, de manière à pouvoir pivoter autour de ce dernier, et il passe au travers de l'ouverture 15 du boîtier. Le bras 81 sert par conséquent de bras de levier qui pivote autour de l'axe 84.

Une barre de butée 85 est fixée au socle 13, par l'intermédiaire du support d'un axe fixe 86 autour duquel la butée peut pivoter. Elle est agencée de manière qu'en position verticale, son extrémité supérieure puisse arrêter la descente du poinçon 2 en position d'expansion des céréales. Un vérin 87, dont la tige est fixée à pivotement sur la butée 85, permet d'amener la barre de butée 85 en position verticale lorsque le poinçon 2 est en position haute et de l'en écarter à la fin de l'expansion des céréales. Comme le reste du dispositif est prévu de la même manière que sur la figure 1, on n'a pas estimé nécessaire de le représenter de manière plus détaillée.

Il faut également noter que le fonctionnement des formes de réalisation suivant les figures 2 et 4 reste absolument le même que celui décrit à propos de la forme de réalisation suivant la figure 1.

Il doit être entendu que la présente invention n'est en aucune façon limitée aux formes de réalisation décrites ci-dessus et que bien des modifications peuvent y être apportées sans sortir du cadre du présent brevet.

Par exemple, on peut prévoir que l'organe d'entraînement du poinçon peut comprendre non seulement deux bras de transmission articulés mais un plus grand nombre de tels bras.

Dans la forme de réalisation illustrée sur la figure 1, le vérin 22 pourrait être agencé de telle manière qu'une tige d'actionnement coaxiale à la tige 25 fasse saillie à l'extrémité opposée du vérin et passe au travers d'une fente prévue à cet effet dans le montant 20. L'extrémité de cette tige pourrait être reliée à pivotement à l'une des extrémités d'un bras de levier, ce bras de levier étant capable de pivoter autour d'un axe fixe supporté par le montant 20 et étant relié à son autre extrémité, à pivotement, à la face inférieure de la plaque 38. La tige du vérin 22 et le bras de levier susdits seraient agencés de telle manière que lorsque la tige d'actionnement 25 est en position de début de course les découpes 40 et 41 soient en dessous du creux de la matrice et que lorsque la tige d'actionnement 25 est en fin de course les plaques 37 et 38 soient dans leur position éloignée du moule. Cette forme de réalisation permet d'éviter l'utilisation du vérin 55.

## Revendications

1. Dispositif de préparation de produits alimentaires à base de céréales cuites sous pression et ensuite expansées, comprenant un moule constitué d'une matrice (1) creuse, fixe, chauffée, un poinçon (2) coopérant avec ce moule, et un moyen pour faire coulisser le poinçon (2), ce dernier occupant au cours de ce coulissement une première position dans laquelle le poinçon (2) est à l'intérieur du moule, qu'il ferme, et exerce sur le moule par ledit moyen une pression pendant la cuisson des céréales, une deuxième position dans laquelle le poinçon (2) est à l'extérieur du moule, qui est alors ouvert, et inversement à nouveau la première position, une troisième position, dans laquelle la cavité du moule n'est pas encore ouverte, étant temporairement occupée par le poinçon (2) grâce à un moyen de butée (27, 59, 85) intervenant au cours du coulissement de la première à la deuxième position, ainsi qu'un dispositif d'introduction (36) des céréales à cuire par l'orifice du moule dans lequel pénètre le poinçon (2) et un dispositif d'évacuation (37, 38, 56) du produit à base de céréales expansées obtenu par ce même orifice, caractérisé en ce que le moyen pour faire coulisser le poinçon comprend un vérin (22, 57, 82) relié directement ou par un organe d'entraînement (17, 18, 81) au poinçon (2) de manière à pouvoir le faire coulisser suivant un mouvement de va-et-vient entre les première et deuxième positions susdites et en ce que le moyen de butée (27, 59, 85) est mobile relativement au poinçon ou à son organe d'entraînement entre une position inactive et une position active dans laquelle il est capable, entre la première et la deuxième position du poinçon (2), d'arrêter le poinçon (2) dans la troisième position dans laquelle le vérin (22, 57, 82) n'exerce plus de pression sur le moule et dans laquelle l'expansion des céréales est achevée.

2. Dispositif suivant la revendication 1, caractérisé en ce que le vérin (57) comprend une tige d'actionnement (71) reliée coaxialement au poinçon (2) et éventuellement façonnée d'une seule pièce avec ce dernier.

3. Dispositif suivant la revendication 1, caractérisé en ce que le vérin (22; 82) comprend une tige d'actionnement (25) reliée à pivotement à l'organe d'entraînement (17, 18; 81) du poinçon (2), lequel organe est également relié à pivotement à l'extrémité du poinçon (2) opposée à celle pénétrant dans le moule et est supporté sur un axe stationnaire (16; 84) de manière à pouvoir pivoter autour de ce dernier.

4. Dispositif suivant la revendication 3, caractérisé en ce que l'organe d'entraînement comprend un bras de transmission unique (81).

5. Dispositif suivant la revendication 3, caractérisé en ce que l'organe d'entraînement comprend au moins deux bras articulés (17, 18) entre-eux, l'un (17) de ces bras articulés étant supporté à son extrémité non articulée sur l'axe stationnaire (16) de manière à pouvoir pivoter autour de ce dernier et l'autre (18) de ces bras étant relié à pivotement à son extrémité non articulée à l'extrémité du poinçon (2) opposée à celle pénétrant dans le moule, la tige d'actionnement (25) du vérin (22) étant reliée à pivotement à l'un de ces bras mutuellement articulés.

6. Dispositif suivant l'une ou l'autre des revendications 1 et 2, caractérisé en ce que le moyen de butée est une butée mobile (59) déplaçable, par l'intermédiaire d'un organe de commande (58), entre deux positions extrêmes, dont l'une est située dans la trajectoire d'au moins une partie du poinçon (2) de manière à l'arrêter dans la troisième position susdite, ce qui permet l'expansion des céréales cuites, la butée mobile (59) étant amenée dans cette position extrême approximativement au moment où le poinçon (2) atteint sa première position où il exerce une pression sur le moule, la butée mobile (59) étant située hors de cette trajectoire dans l'autre de ses positions extrêmes et étant amenée à cette autre position à la fin de l'expansion des céréales.

7. Dispositif suivant la revendication 6, caractérisé en ce que la butée mobile (59) bute, en position de butée, contre une saillie d'appui (60) prévue à cet effet de manière fixe sur la tige (3) du poinçon (2).

8. Dispositif suivant l'une quelconque des revendications 1 et 3 à 5, caractérisé en ce que le moyen de butée est une butée mobile (27; 85) déplaçable, par l'intermédiaire d'un organe de commande (30; 87), entre deux positions extrêmes, dont l'une est située dans la trajectoire d'au moins une partie du poinçon (2) ou de l'organe d'entraînement (17, 18; 81) de ce dernier de manière à l'arrêter dans la troisième position susdite, ce qui permet l'expansion des céréales, la butée mobile (27; 85) étant amenée dans cette position extrême approximativement au moment où le poinçon (2) atteint sa première position où il exerce une pression sur le moule, la butée mobile (27; 85) étant située hors de cette trajectoire dans l'autre de ses positions extrêmes et étant amenée à cette autre position à la fin de l'expansion des céréales.

9. Dispositif suivant l'ensemble des revendications 3 et 8, caractérisé en ce que l'extrémité de la tige d'actionnement (25) du vérin (22) est reliée à pivotement à un bras (17) de l'organe d'entraînement (17, 18), le vérin (22) étant supporté par un support stationnaire (20) de manière à pouvoir pivoter par rapport à ce dernier, et en ce que la butée mobile est une barre (27) capable de pivoter à l'une de ses extrémités autour d'un axe (29) de manière qu'en position de butée son autre extrémité s'appuie contre une extrémité articulée (35) du bras susdit (17), et que la force imprimée par ce bras (17) sur la barre de butée (27) ait pour direction l'axe longitudinal de cette dernière.

10. Dispositif suivant l'une quelconque des revendications 6 à 9, caractérisé en ce que l'organe de commande de la butée mobile (27; 59; 85) est un vérin (30; 58; 87).

11. Dispositif suivant l'une quelconque des revendications 1 à 10, caractérisé en ce que la matrice (1) du moule est située au-dessus du poinçon (2), de sorte que, lors de la séparation entre la matrice (1) et le poinçon (2), les produits cuits et expansés puissent se dégager par gravité de la matrice (1) pour reposer sur le poinçon (2) et qu'une simple poussée horizontale exercée sur ceux-ci permette de les évacuer.

12. Dispositif suivant l'une quelconque des revendications 1 à 11, caractérisé en ce que le dispositif d'alimentation en céréales à cuire est un doseur (36) comprenant un jeu de deux plaques horizontales superposées (37, 38) et pouvant, sous l'action de moyens de déplacement (55), coulisser, entre deux positions extrêmes, dans leur plan, sur un support (39) situé à côté du poinçon (2) du moule, sensiblement à la même hauteur que celui-ci, la plaque supérieure (37) et la plaque inférieure (38) présentant chacune une découpe (40, 41), les dimensions de la découpe (40) de la plaque supérieure (37) correspondant à la quantité des céréales à introduire dans le moule, cette découpe (40) se situant, dans une première position extrême des deux plaques (37, 38), la plus éloignée du moule, en dessous d'une installation d'alimentation (42) des produits à cuire et à expanser, la découpe (41) de la plaque inférieure (38) étant située, dans cette position, de manière plus écartée du moule que la découpe (40) de la plaque supérieure (37), cette dernière étant ainsi, dans cette position, obturée par la plaque inférieure (38) de manière à déterminer ainsi un réservoir apte à recevoir une dose desdites céréales, la découpe (40) de la plaque supérieure (37) se trouvant, dans la deuxième position extrême de cette plaque, entre la matrice (1) et le poinçon (2) exactement en dessous du creux de la matrice (1), un moyen de butée (45) empêchant un déplacement de la plaque supérieure (37) au-delà de cette position sous l'action des moyens de déplacement (55) qui continuent à entraîner la plaque inférieure (41), la découpe (41) de la plaque inférieure (38) étant située, dans sa deuxième position extrême, exactement en dessous de la découpe (40) de la plaque supérieure (37), de manière à permettre aux produits contenus dans cette dernière de se déposer par gravité sur le poinçon (2), les moyens de déplacement (55) des plaques ramenant ensuite les deux plaques (37, 38) à nouveau dans leur première position.

13. Dispositif suivant la revendication 12, caractérisé en ce que la plaque inférieure (38) est agencée de manière à pouvoir coulisser dans une rainure de guidage (43) pratiquée le long de la face inférieure de la plaque supérieure (37) et en ce que les moyens de déplacement (55) sont reliés à la plaque inférieure (38), laquelle est reliée à la plaque supérieure (37) par l'intermédiaire d'un moyen de ressort (49) à l'encontre duquel doivent agir les moyens de déplacement (55) pour que la plaque inférieure (38) atteigne sa deuxième position extrême, ce moyen de ressort (49) permettant de faire coulisser tout d'abord la plaque inférieure (38) par rapport à la plaque supérieure (37) au début du déplacement des plaques sous l'action des moyens de déplacement (55) vers leur première position extrême, de manière que les découpes (40, 41) des deux plaques ne soient plus situées l'une au-dessus de l'autre en dessous de l'installation d'alimentation (42).

14. Dispositif suivant l'une ou l'autre des revendications 12 et 13, caractérisé en ce que les plaques (37, 38) coulissent au travers de guides stationnaires (44) disposés sur l'installation d'alimentation (42), le moyen de butée de la plaque supérieure (37) consistant en une saillie (45), agencée dans la première position extrême susdite de cette plaque à une distance de ces guides (44) égale à la distance de déplacement nécessaire pour que la découpe (40) de la plaque supérieure (37) soit exactement en dessous de la matrice (1).

15. Dispositif suivant l'une ou l'autre des revendications 13 et 14, caractérisé en ce que, dans la première position extrême des plaques (37, 38), la plaque inférieure (38) fait saillie par rapport à la plaque supérieure (37) dans la direction opposée au moule, l'extrémité de la plaque inférieure (38) étant pourvue d'un rebord (46) situé à une distance de la plaque supérieure (37) égale à la distance requise pour que les découpes (40, 41) des deux plaques (37, 38) soient exactement l'une au-dessus de l'autre, le moyen de ressort consistant en un ressort de rappel (49) agencé entre la plaque supérieure (37) et ce rebord (46).

16. Dispositif suivant l'une quelconque des revendications 12 à 15, caractérisé en ce que le moyen d'actionnement des plaques (37, 38) est un vérin (55), dont la tige d'actionnement orientée en direction du moule est reliée de manière fixe à la plaque inférieure (38).

17. Dispositif suivant l'une quelconque des revendications 12 à 15, caractérisé en ce que le moyen d'actionnement des plaques (37, 38) est le vérin d'actionnement (22) entraînant le mouvement de va-et-vient du poinçon (2), un bras de levier supporté en son centre sur un axe fixe de manière à pouvoir pivoter autour de ce dernier étant relié à pivotement, à l'une de ses extrémités, à la tige de ce vérin et, à l'autre de ses extrémités, à la plaque inférieure (38) du doseur (36), de manière que le bras de levier, pendant l'écartement du poinçon (2) à partir du moule, entraîne l'avancement des plaques (37, 38) du doseur (36) dans leur deuxième position extrême et qu'il entraîne leur retour dans leur première position extrême avant que le poinçon (2) n'atteigne le niveau des plaques (37, 38).

18. Dispositif suivant l'une quelconque des revendications 12 à 17, caractérisé en ce que les plaques (37, 38) du doseur (36) servent également de dispositif d'évacuation du produit expansé lequel est, au cours de l'avancement suivant un plan horizontal des plaques vers leur deuxième position extrême, poussé dans une gouttière (56) agencée du côté du poinçon (2) opposé à celui où se trouve l'installation d'alimentation (42).

## Patentansprüche

1. Vorrichtung zur Herstellung von Nahrungsmitteln auf Basis von unter Druck zubereiteten (gekochten) und anschliessend expandierten Getreidemassen, mit einer aus einer hohlen, feststehenden, erhitzten Matrize (1) bestehenden Form, einem mit dieser Form zusammenwirkenden Dorn (2) und einem Mittel zur Verschiebung des Dorns (2), der während dieser Verschiebung eine erste Stellung, bei der der Dorn (2) sich innerhalb der Form befindet, sie abschliesst und während der Zubereitung der Getreidemasse auf die Form einen durch das genannte Mittel übertragenen Druck ausübt, eine zweite Stellung, bei der der Dorn (2) sich ausserhalb der nun geöffneten Form befindet, und umgekehrt wiederum die erste Stellung einnimmt, wobei der Dorn eine dritte Stellung, bei der der Hohlraum der Form noch nicht geöffnet ist, mit Hilfe eines Anschlagmittels (27, 59, 85), im Betrieb während der Verschiebung von der ersten Stellung aus zur zweiten Stellung, vorübergehend einnimmt, sowie mit einer Vorrichtung (36) zum Zuführen der zuzubereitenden Getreidemasse durch die Öffnung in der Form, durch die der Dorn (2) eintritt, und einer Vorrichtung (37, 38, 56) zur Abgabe des durch dieselbe Öffnung erhaltenen expandierten Getreideerzeugnisses, dadurch gekennzeichnet, dass das Mittel zur Verschiebung des Dorns einen mit dem Dorn (2) unmittelbar oder durch ein Antriebsmittel so verbundenen Arbeitszylinder (22, 57, 82) aufweist, dass der Dorn (2) zwischen der ersten und der zweiten genannten Stellung hin- und herbewegen kann, und wobei das Anschlagmittel (27, 59, 85) gegenüber dem Dorn oder seinem Antriebsmittel zwischen einer unwirksamen Stellung und einer wirksamen Stellung, bei der es zwischen der ersten und der zweiten Stellung des Dorns (2) fähig ist, den Dorn in der dritten Stellung abzustellen, bei der der Arbeitszylinder (22, 57, 82) auf die Form keinen Druck mehr ausübt und die Expandierung der Getreidemasse zu Ende gebracht, beweglich ist.

2. Vorrichtung nach Anspruch 1, dadurch gekennzeichnet, dass der Arbeitszylinder (57) eine mit dem Dorn (2) koaxial verbundene und gegebenenfalls mit diesem einstückige Kolbenstange (71) aufweist.

3. Vorrichtung nach Anspruch 1, dadurch gekennzeichnet, dass der Arbeitszylinder (22; 82) eine mit dem Antrieb (17, 18; 81) des Dornes (2) drehbar verbundene Kolbenstange (25) aufweist, wobei der Antrieb ebenfalls mit dem Ende des Dornes (2) drehbar verbunden ist, das dem in die Form eintretenden Ende gegenüberliegt, sowie auf einer feststehenden Achse (16; 84) drehbar gelagert ist.

4. Vorrichtung nach Anspruch 3, dadurch gekennzeichnet, dass der Antrieb einen einzigen Antriebsarm (81) aufweist.

5. Vorrichtung nach Anspruch 3, dadurch gekennzeichnet, dass der Antrieb mindestens zwei aneinander angelenkte Arme (17, 18) aufweist, wobei der eine Arm (17) an seinem gelenkfreien Ende drehbar auf der feststehenden Achse (16) gelagert ist und der andere Arm (18) an seinem gelenkfreien Ende mit dem Ende des Dornes (2) drehbar verbunden ist, das dem in die Form eintretenden Ende gegenüberliegt, und wobei die Kolbenstange (25) des Arbeitszylinders (22) mit einem dieser Arme ebenfalls drehbar verbunden ist.

6. Vorrichtung nach Anspruch 1 oder 2, dadurch gekennzeichnet, dass das Anschlagmittel ein beweglicher Anschlag (59) ist, der über einen Antrieb (58) zwischen zwei Endstellungen bewegbar ist, wobei die eine Endstellung sich in der Bahn von zumindest einem Teil des Dornes (2) derart befindet, dass dieser in der dritten Stellung anhält, so dass die zubereitete Getreidemasse expandieren kann, und wobei der bewegliche Anschlag (59) etwa in dem Moment in diese Endstellung gebracht wird, in dem der Dorn (2) seine erste Stellung einnimmt, bei der dieser auf die Form einen Druck ausübt, und dass der bewegliche Anschlag (59) in seiner anderen Endstellung sich ausserhalb dieser Bahn befindet und nach Expansion der Getreidemasse in diese andere Endstellung gebracht wird.

7. Vorrichtung nach Anspruch 6, dadurch gekennzeichnet, dass der bewegliche Anschlag (59) in seiner Anschlagstellung an einer an der Stange (3) des Dornes (2) fest angebrachten und dafür vorgesehenen vorspringenden Stütze (60) anliegt.

8. Vorrichtung nach einem der Ansprüche 1 und 3 bis 5, dadurch gekennzeichnet, dass das Anschlagmittel ein beweglicher Anschlag (27; 85) ist, der über einen Antrieb (30; 87) zwischen zwei Endstellungen bewegbar ist, wobei die eine Endstellung sich in der Bahn von zumindest einem Teil des Dornes (2) bzw. dessen Antriebs (17, 18; 81) derart befindet, dass dieser in der dritten Stellung anhält, so dass die zubereitete Getreidemasse expandieren kann, und wobei der bewegliche Anschlag (27; 85) etwa in dem Moment in diese Endstellung gebracht wird, in dem der Dorn (2) seine erste Stellung einnimmt, bei der dieser auf die Form einen Druck ausübt, und dass der bewegliche Anschlag (27; 85) in seiner anderen Endstellung sich ausserhalb dieser Bahn befindet und nach Expansion der Getreidemasse in diese andere Endstellung gebracht wird.

9. Vorrichtung nach den Ansprüchen 3 und 8, dadurch gekennzeichnet, dass das Ende der Kolbenstange (25) des Arbeitszylinders (22) mit einem Arm (17) des Antriebs (17, 18) drehbar verbunden ist, wobei der Arbeitszylinder (22) an einer feststehenden Stütze (20) drehbar gelagert ist, dass der bewegliche Anschlag eine Stange (27) ist, die mit ihrem einen Ende an einer Achse (29) derart angelenkt ist, dass in der Anschlagposition ihr anderes Ende sich auf ein Gelenkende (35) des Armes (17) stützt und dass die durch den Arm (17) auf die Anschlagstange (27) ausgeübte Kraft in deren Längsrichtung wirkt.

10. Vorrichtung nach einem der Ansprüche 6 bis 9, dadurch gekennzeichnet, dass der Antrieb des beweglichen Anschlags (27; 59; 85) ein Arbeitszylinder (30; 58; 87) ist.

11. Vorrichtung nach einem der Ansprüche 1 bis 10, dadurch gekennzeichnet, dass die Matrize (1) der Form sich oberhalb des Dornes (2) befindet, so dass bei Trennung der Matrize (1) und des Dornes (2) die zubereiteten und expandierten Getreideerzeugnisse durch ihr Gewicht sich von der Matrize (1) lösen können und auf dem Dorn (2) abgelegt werden, und dass die Getreideerzeugnisse durch einen auf sie gerichteten einfachen horizontalen Schub abgeräumt werden können.

12. Vorrichtung nach einem der Ansprüche 1 bis 11, dadurch gekennzeichnet, dass die die zuzubereitenden Getreideerzeugnisse zuführende Vorrichtung eine Dosiervorrichtung (36) ist, die ein Paar übereinanderliegende Horizontalplatten (37, 38) aufweist, die durch einen Antrieb (55) auf einer neben dem Dorn (2) der Form befindlichen Stütze (39) und im wesentlichen in gleicher Höhe wie der Dorn (2) zwischen zwei Endstellungen gleitend verschiebbar sind, dass die obere und die untere Platte (37 bzw. 38) jeweils eine Bohrung (40 bzw. 41) aufweisen, wobei die Abmessungen der Bohrung (40) der oberen Platte (37) der Menge der in die Form einzufüllenden Getreidemasse entsprechen, und diese Bohrung (40) in einer ersten Endstellung der zwei Platten (37, 38) sich am weitesten entfernt von der Form und unterhalb eines für die zuzubereitenden und zu expandierenden Erzeugnisse vorgesehenen Einlasszylinders (42) befindet, dass die Bohrung (41) der unteren Platte (38) in dieser Stellung von der Form weiter entfernt liegt als die Bohrung (40) der oberen Platte (37), die in dieser Stellung durch die untere Platte (38) derart abgeschlossen ist, dass sie einen zur Aufnahme einer Charge der genannten Getreidemasse geeigneten Behälter bildet, dass die Bohrung (40) der oberen Platte (37) in der zweiten Endstellung dieser Platte zwischen der Matrize (1) und dem Dorn (2) genau unter dem Hohlraum der Matrize (1) liegt, dass ein Anschlagmittel (45) eine Verschiebung der oberen Platte (37) aus dieser Stellung durch den die untere Platte (38) weiter antreibenden Antrieb (55) verhindert, dass die Bohrung (41) der unteren Platte (38) in ihrer zweiten Endstellung genau unterhalb der Bohrung (40) der oberen Platte (37) liegt, so dass die darin enthaltenen Erzeugnisse durch ihr Gewicht auf dem Dorn (2) abgelegt werden können, und dass der Antrieb (55) der Platten anschliessend die zwei Platten (37, 38) erneut in ihre erste Stellung zurückbringt.

13. Vorrichtung nach Anspruch 12, dadurch gekennzeichnet, dass die untere Platte (38) in einer auf der Unterseite der oberen Platte (37) entlanglaufenden Führungsnut (43) gleitend geführt ist und dass der Antrieb (55) mit der unteren Platte (38) verbunden ist, die wiederum über eine vom Antrieb (55) beaufschlagte Federung (49) mit der oberen Platte (37) verbunden ist, damit die untere Platte (38) ihre zweite Endstellung einnimmt, wobei am Anfang der Plattenverschiebung durch den Antrieb (55) über diese Federung (49) zunächst die untere Platte (38) gegenüber der oberen Platte (37) in Richtung ihrer ersten Endstellung derart verschoben wird, dass die Bohrungen (40, 41) der zwei Platten (37, 38) nicht mehr unterhalb der Dosiervorrichtung (36) übereinanderliegen.

14. Vorrichtung nach einem der Ansprüche 12 oder 13, dadurch gekennzeichnet, dass die Platten (37, 38) über feststehende, auf der Dosiervorrichtung (42) angeordneten Gleitschienen (44) gleiten, wobei der Anschlag der oberen Platte (37) aus einem Vorsprung (45) besteht, der in der ersten Endstellung dieser Platte in einem Abstand von diesen Gleitschienen (44) angeordnet ist, der der Verschiebungsstrecke entspricht, die erforderlich ist, damit die Bohrung (40) der oberen Platte (37) genau unterhalb der Matrize (1) liegt.

15. Vorrichtung nach einem der Ansprüche 13 oder 14, dadurch gekennzeichnet, dass in der ersten Endstellung der Platten (37, 38) die untere Platte (38) in der der Form entgegengesetzten Richtung gegenüber der oberen Platte (37) vorspringt, dass das Ende der unteren Platte (38) mit einem in einem Abstand von der oberen Platte (37) angeordneten Ansatz (46) versehen ist, der so bemessen ist, dass die Bohrungen (40, 41) der zwei Platten (37, 38) genau übereinanderliegen, und dass die Federung aus einer zwischen der oberen Platte (37) und dem Ansatz (46) angeordneten Rückstellfeder (49) besteht.

16. Vorrichtung nach einem der Ansprüche 12 bis 15, dadurch gekennzeichnet, dass der Antrieb der Platten (37, 38) ein Arbeitszylinder (55) ist, dessen in Richtung der Form orientierte Kolbenstange mit der unteren Platte (38) fest verbunden ist.

17. Vorrichtung nach einem der Ansprüche 12 bis 15, dadurch gekennzeichnet, dass der Antrieb der Platten (37, 38) durch den Arbeitszylinder (22) gebildet wird, der die Hin- und Herbewegung des Dornes (2) bewirkt, wobei ein in seiner Mitte auf einer feststehenden Achse drehbar um diese gelagerter Hebelarm an einem seiner Enden mit der Kolbenstange dieses Arbeitszylinders drehbar verbunden ist und am anderen Ende mit der unteren Platte (38) der Dosiervorrichtung (36) derart verbunden ist, dass während der Entnahme des Dornes (2) aus der Form der Hebelarm die Platten (37, 38) der Dosiervorrichtung (36) nach vorne in ihre zweite Endstellung bewegt und sie in ihre erste Endstellung zurückbewegt, bevor der Dorn (2) die Höhe der Platten (37, 38) erreicht hat.

18. Vorrichtung nach einem der Ansprüche 12 bis 17, dadurch gekennzeichnet, dass die Platten (37, 38) der Dosiervorrichtung (36) gleichzeitig als Abgabevorrichtung für das expandierte Erzeugnis dienen, das während der horizontalen Bewegung der Platten in Richtung auf deren zweite Endstellung in eine Rinne (56) geschoben wird, die sich an der der Dosiervorrichtung (42) gegenüberliegenden Seite des Dornes (2) befindet.

**Claims**

1. Device for preparing food products from cereals which are pressure cooked and thereafter expanded, comprising a mould comprised of a hollow, fixed, heated die (1), a punch (2) cooperating with said mould, and a means for slidably driving the punch (2), the punch holding during said sliding a first position wherein the punch (2) is inside the mould, while closing the latter, and exerts on the mould a pressure transmitted through said means during the cooking of the cereals, a second position, wherein the punch (2) is outside the mould which is then open, and reciprocally again said first position, a third position, wherein the mould cavity is not yet open, being temporarily reached by the punch (2) by means of a stop means (27, 59, 85) operative during the sliding from the first position to the second position, as well as means for introducing (36) cereals to be cooked through the opening of the mould through which the punch (2) enters, and means for discharging (37, 38, 56) the obtained product from expanded cereals through the same opening, characterized in that said means for slidably driving the punch comprises a jack (22, 57, 82) so connected to the punch (2), directly or through a driving means (17, 18, 81), that it may slide according to an alternating movement between said first and second positions and in that relatively to the punch or its driving means said stop means (27, 59, 85) is movable, between an inactive position and an active position wherein it is able, between the first and the second positions of the punch (2), to stop the punch (2) in said third position wherein je jack (22, 57, 82) exerts no more pressure on the mould and the expansion of the cereals is brought to an end.

2. Device according to claim 1, characterized in that the jack (57) comprises an operating rod (71) coaxially connected to the punch (2) and possibly integral therewith.

3. Device according to claim 1, characterized in that the jack (22; 82) comprises a driving rod (25) which is swingably connected to the punch-driving member (17, 18; 81), said member being also swingably connected to that end of the punch (2) opposite the end entering the mould and bearing on a fixed shaft (16; 84) to be swingable thereabout.

4. Device according to claim 3, characterized in that the drive member comprises a single drive arm.

5. Device according to claim 3, characterized in that the drive member comprises at least two arms (17, 18) hinged together, the one hinged arm (17) being supported at the unhinged end thereof on the fixed shaft (16) to be swingable thereabout and the other arm (18) being swingably connected at the unhinged end thereof to that punch end opposite the end entering the mould, the jack operating rod (25) being swingably connected to one of said hinged arms.

6. Device according to any one of claims 1 and 2, characterized in that the stop means is a movable stop (59) which can be moved through a control member (58), between two end positions the one of which lies in the path of at least one part the punch (2) to stop same in said third position allowing the cooked cereals to expand, the movable stop (59) being brought to said end position approximately at the time where the punch (2) reaches its first position where it exerts a pressure on the mould, said movable stop (59) being located outside said path in the other end position thereof and being brought to said other position as the cereals expansion is completed.

7. Device according to claim 6, characterized in that the movable stop (59), in abuting position, engages a bearing projection (60) fixedly provided therefor on the punch rod (3).

8. Device according to any one of claims 1 and 3 to 5, characterized in that the stop means is a movable stop (27; 85) which can be moved through a control member (30; 87) between two end positions, the one of which lies in the path of at least one part of the punch (2) or the driving member (17, 18; 81) thereof to stop the punch in said third position allowing the cooked cereals to expand, the movable stop (27; 85) being brought to said end position approximately at the time where the punch (2) reaches said first position, where it exerts a pressure on the mould, said movable stop (27; 85) being located outside said path in the other end position thereof and being brought to said other position as the cereals expansion is completed.

9. Device according to claims 3 and 8, together, characterized in that the end of the jack operating rod (25) is swingably connected to an arm (17) of the driving member (17, 18), the jack (22) bearing on a fixed support (20) to be swingable relative thereto, and the movable stop is a bar (27) swingable at the one end thereof about a shaft (29) in such a way that, in abuting position, the other end thereof bears on the hinged end (35) from said arm (17) and the force imparted by said arm (17) to said stop bar (27) be in the direction of the lengthwise axis of said stop bar.

10. Device according to any one of claims 6 to 9, characterized in that the control means for the movable stop (27; 59; 85) is a jack (30; 58; 87).

11. Device according to any one of claims 1 to 10, characterized in that the mould die (1) is arranged above the punch (2) in such a way that, when the punch (2) is spaced from the die (1), the cooked and expanded products can be discharged by gravity from the die (1) to rest on the punch (2) and to be discharged therefrom by simply pushing horizontally thereon.

12. Device according to any one of claims 1 to 11, characterized in that the device for feeding cereals to be cooked is a feed regulator (36) comprising a set of two superimposed horizontal plates (37, 38) which are slidable, under the action of moving means (55), between two end positions in the plane thereof, on a support (39) lying next to the mould punch (2) substantially level therewith, the upper plate (37) and the lower plate (38) each having a cut-out (40, 41), the size of the cut-out (40) in the upper plate (37) corresponding to the amount of cereals to be fed to the mould, said cut-out (40) lying, in the first end position of both plates (37, 38), farthest way from the mould, underneath a feeding means (42) for the products to be cooked and expanded, the cut-out (41) in the lower plate (38) being located in said position farther away from the mould than the cut-out (40) in the upper plate (37), said upper plate cut-out thus being sealed in said position by the lower plate (38) to form a container to receive a charge from said cereals, the cut-out (40) in the upper plate (37) lying in the second end position of said plate, between the die (1) and the punch (2), precisely underneath the die hollow, a stop means (45) preventing a movement of the upper plate (37) beyond said position under the action of said moving means (55) which still drive the lower plate (38), the cut-out (41) in the lower plate (38) being arranged in the second position thereof, precisely underneath the cut-out (40) in the upper plate (37), to let the product contained therein settle by gravity on the punch (2), the plate moving means (55) returning thereafter both plates (37, 38) again to the first position thereof.

13. Device according to claim 12, characterized in that the lower plate (38) is so arranged as to be slidable inside a guide groove (43) provided along the lower surface of the lower plate (37) and the moving means (55) are connected to the lower plate (38) which is connected to the upper plate (37) by spring means (49) against which the moving means (55) have to operate to bring the lower plate (38) to said second end position thereof, said spring means (49) allowing to first let the lower plate (38) slide relative to the upper plate (37) at the start of the plate movement under the action of the moving means (55) towards the first end position thereof, in such a way the cut-outs (40, 41) in both plates will not lie one above the other underneath the feeding means (42).

14. Device according to either one of claims 12 and 13, characterized in that the plates (37, 38) slide through fixed guides (44) provided on the feeding means (42), the stop means for the upper plate (37) being comprised of a projection (45) arranged in the first end position of said plate at a distance from said guides (44) equal to the movement distance required to bring the upper plate cut-out (40) precisely below the die (1).

15. Device according to either one of claims 13 and 14, characterized in that , in the first end position of the plates (37, 38), the lower plate (38) projects relative to the upper plate (37) in a direction opposite to the mould, the end of said lower plate (38) being provided with a rim (46) located at a distance from the upper plate (37) equal to that distance required to bring the cut-outs (40, 41) in both plates (37, 38) precisely one above the other, said spring means being comprised of a return spring (49) arranged between the upper plate (37) and said rim (46).

16. Device according to any one of claims 12 to 15, characterized in that the operating means for the plates (37, 38) is a jack, the operating rod of which directed towards the mould is fixedly connected to the lower plate (38).

17. Device according to any one of claims 12 to 15, characterized in that the operating means for the plates (37, 38) is the operating jack (22) controlling the alternating movement of the punch (2), a lever arm supported in the center thereof on a fixed shaft to be swingable thereabout being hingedly connected, at the one end thereof, to the jack rod and, at the other end thereof, to the lower plate (38) of the feed regulator (36), in such a way that said lever arm, as the punch (2) is moved away from the mould, causes the movement of the plates (37, 38) of the feed regulator (36) to the second end position thereof and the return thereof to their first end position before the punch (2) reaches the level of the plates (37, 38).

18. Device according to any one of claims 12 to 17, characterized in that the plates (37, 38) of the feed regulator (36) are also used as discharge device for the expanded products which is pushed during the movement of said plates in a horizontal plane to the second end position thereof, into a trough (56) arranged on that punch side opposite to the side where the feeding means (42) are provided.

Fig. 1

Fig. 3

## Fig. 2

## Fig. 4